# EUROPÄISCHE PATENTSCHRIFT

(11) **EP 1 359 050 B1**
(45) Veröffentlichungstag und Bekanntmachung des Hinweises auf die Patenterteilung: **20.01.2010**
(21) Anmeldenummer: 03009980.8
(22) Anmeldetag: 02.05.2003
(51) Int. Cl.: B60N 2/07, B21D 5/08, B23K 26/36

(54) **Verfahren zur Herstellung einer Schiene mit einer innen angeordneten Verzahnung sowie nach diesem Verfahren hergestellte Schiene**
Method for producing a slide with an internal toothing and slide produced according to this method
Procédé pour fabriquer une glissière à denture interne et glissière produite selon ce procédé

(30) Priorität: 02.05.2002 DE 10219612
(43) Veröffentlichungstag der Anmeldung: 05.11.2003
(73) Patentinhaber: Tillmann Profil GmbH, 59846 Sundern (DE)
(72) Erfinder: Böhm, Ekkehard, 59846 Sundern (DE); Schmidt, Ferdinand, 59846 Sundern (DE)
(74) Vertreter: Basfeld, Rainer

(56) Entgegenhaltungen:
- EP-A- 0 507 296
- EP-A- 0 736 345
- EP-A- 0 978 348

## Beschreibung

Die vorliegende Erfindung betrifft ein Verfahren zur Herstellung einer Schiene mit einer innen angeordneten Verzahnung gemäß dem Oberbegriff des Anspruchs 1.

Schienen der vorgenannten Art werden beispielsweise in einem Kraftfahrzeug für die Befestigung und die Führung eines Kraftfahrzeugsitzes verwendet. Die vorgenannten Verzahnungen müssen dabei relativ exakt ausgeführt sein, um ein reibungsloses und passgenaues Verstellen der an dem Kraftfahrzeugsitz befestigten Gegenstücke der Verzahnung innerhalb der Verzahnung zu ermöglichen. Aus dem Stand der Technik sind nur relativ aufwendige Verfahren zur Herstellung einer derartigen Schiene bekannt, bei denen beispielsweise die Verzahnung relativ umständlich in die zweifach nach innen umgebogenen Ränder der U-Schenkel eingebracht werden müsste. Alternativ dazu könnte die Sitzschiene aus mehreren Teilen zusammengebaut werden, wobei dann die Verzahnung nachträglich an ein U-Profil angeschweißt oder auf andere Art an dem U-Profil befestigt wird.

Ein Verfahren der eingangs genannten Art ist aus der EP 0 736 345 A1 bekannt. Bei diesem Verfahren wird durch Walzen aus einem flächigen Ausgangsmaterial eine Schiene mit einem im wesentlichen U-förmigen Querschnitt geformt. Die Ränder der U-Schenkel werden zweifach nach innen umgebogen. In diese zweifach umgebogenen Ränder wird eine Verzahnung eingerollt.

In der EP 0 978 348 A2 ist eine Führungsschiene offenbart, die für Geräte zur Beton- bezeihungsweise Gesteinsbohrung vorgesehen ist. In dieser Führungsschiene sind in regelmäßigen Abständen zueinander Lochungen angeordnet. Gemäß der EP 0 978 348 A2 können diese Lochungen mit einem Laser in die Führungsschiene geschnitten werden.

Das der vorliegenden Erfindung zugrunde liegende Problem ist die Schaffung eines Verfahrens der eingangs genannten Art, mittels dem die zu schaffende Schiene einfach und kostengünstig aber vergleichsweise exakt hergestellt werden kann.

Diese Problemstellung wird durch ein Verfahren der eingangs genannten Art mit den kennzeichnenden Merkmalen des Anspruchs 1 gelöst. Die Unteransprüche betreffen bevorzugte Ausgestaltungen der Erfindung.

Gemäß dem kennzeichnenden Teil des Anspruchs 1 ist vorgesehen, dass die Verzahnung durch Schneiden mit einem Laser gefertigt wird und dass in einem ersten Verfahrensschritt die einander in Querrichtung des Ausgangsmaterials gegenüberliegenden äußeren Ränder zweifach umgebogen werden, so dass der Abschnitt, in dem die Verzahnung angeordnet werden soll, sich parallel und beabstandet zu der Fläche des Ausgangsmaterials erstreckt Das Schneiden mit einem Laser erlaubt eine sehr genaue Ausführung der Verzahnung. Aufgrund der Tatsache, dass sich die zweifach umgebogenen Ränder, in denen die Verzahnung angeordnet werden soll, parallel zu der Fläche des Ausgangsmaterials erstrecken, lassen sich in diesen Abschnitten der Ränder sehr leicht beispielsweise von oben durch Schneiden mit einem Laser die entsprechenden Verzahnungen einbringen.

Insbesondere werden hierbei erst nach dem Einbringen der Verzahnung in die vorgenannten Abschnitte die U-Schenkel aus dem flächigen Ausgangsmaterial herausgebogen. Der Prozess des Erstellens des U-Profils wird somit erst nach dem Laserschneiden der Verzahnung durchgeführt, weil bei umgekehrter Reihenfolge das Schneiden der Verzahnung mittels eines Lasers entweder unmöglich wäre oder aber mit wesentlich höherem Aufwand verbunden wäre.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Draufsicht auf eine erfindungsgemäße Schiene;
- Fig. 2: eine Schnittansicht gemäß den Pfeilen II - II in Fig. 1;
- Fig. 3: eine ausschnittsweise Schnittansicht gemäß den Pfeilen III - III in Fig. 1;
- Fig. 4: eine Draufsicht auf die erfindungsgemäße Schiene während der Fertigung vor dem Umbiegen der U-Schenkel;
- Fig. 5: eine Schnittansicht gemäß den Pfeilen V - V in Fig. 4;
- Fig. 6: einen Querschnitt durch eine weitere Ausführungsform einer erfindungsgemäßen Schiene;
- Fig. 7: einen Querschnitt durch eine weitere Ausführungsform einer erfindungsgemäßen Schiene.

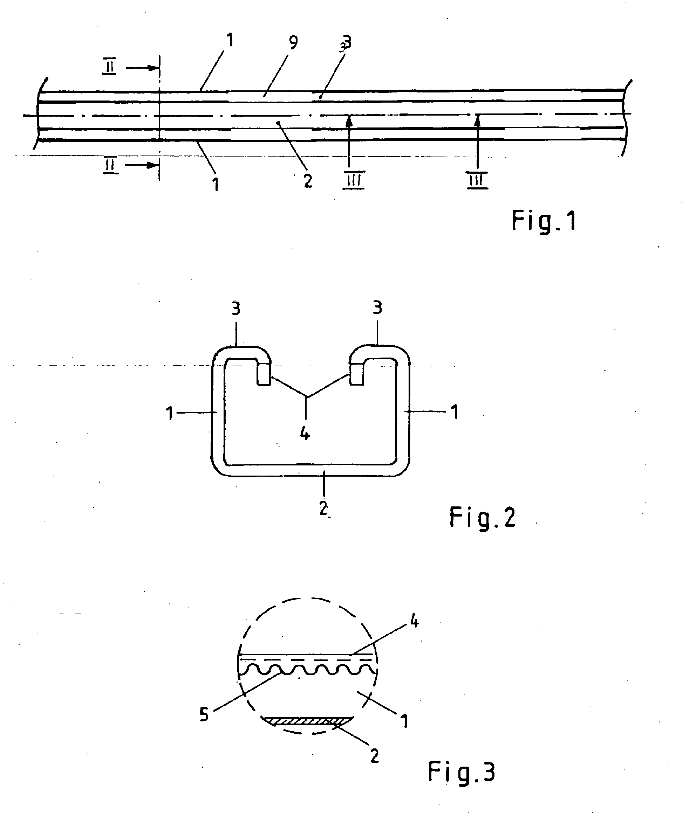

Wie aus Fig. 1 und Fig. 2 ersichtlich ist, weist eine erfindungsgemäße Schiene einen im wesentlichen U-förmigen Querschnitt auf mit zwei U-Schenkeln 1, die durch einen Boden 2 miteinander verbunden sind. An ihren von dem Boden 2 abgewandten Rändern sind die U-Schenkel 1 zweifach nach innen umgebogen, so dass sich von von dem Boden 2 abgewandten Rändern der U-Schenkel 1 ein erster Abschnitt 3 um 90° nach innen erstreckt, von dessen Ende sich ein zweiter Abschnitt 4 um 90° nach unten erstreckt. Der zweite Abschnitt 4 ist somit parallel zu den U-Schenkeln 1.

Insbesondere aus Fig. 3 ist ersichtlich, dass in dem nach unten verlaufenden zweiten Abschnitt 4 eine Verzahnung 5 vorgesehen ist, die in dem abgebildeten Ausführungsbeispiel aus einer regelmäßigen Abfolge von Zähnen und zu diesen benachbarten Ausnehmungen besteht, so dass sich eine im wesentlichen sinusförmige untere Kante des zweiten Abschnittes 4 ergibt.

Die erfindungsgemäße Schiene kann beispielsweise als Sitzschiene in einem Kraftfahrzeug dienen.

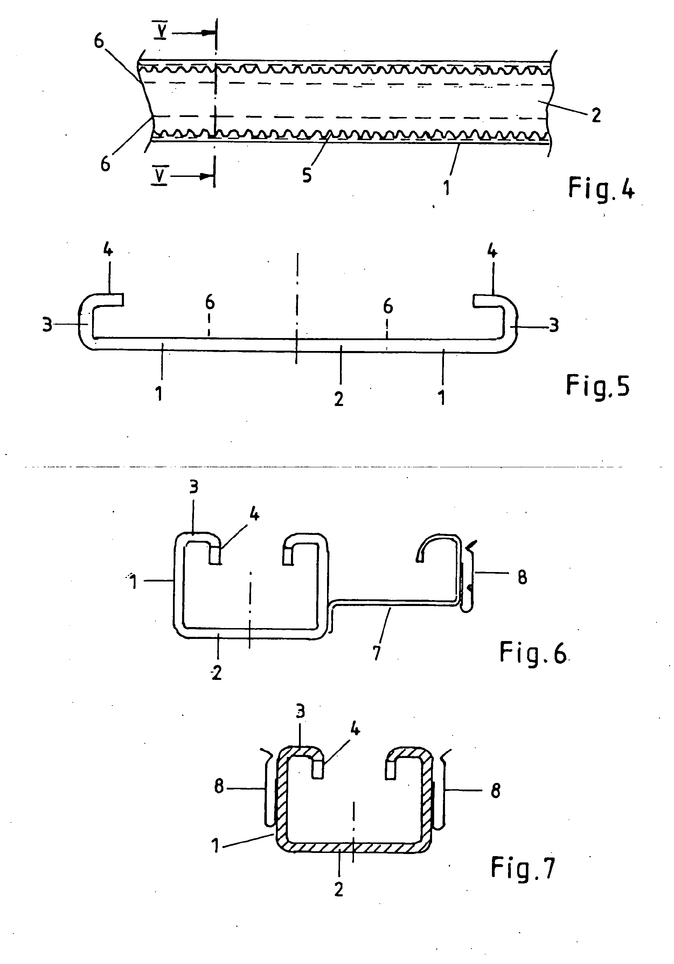

Aus Fig. 4 und Fig. 5 ist ein Zwischenstadium der erfindungsgemäßen Schiene während des erfindungsgemäßen Herstellungsprozesses ersichtlich. Die erfindungsgemäße Schiene kann gemäß dem erfindungsgemäßen Verfahren aus einem flächigen Ausgangsmaterial beispielsweise Blech, durch Walzen geformt werden, wobei die Verzahnung durch Schneiden mit einem Laser gefertigt wird. Das flächige Ausgangsmaterial wird in ersten Arbeitsschritten durch zweifaches Umbiegen der äußeren Ränder in eine Form gebracht, die dem Querschnitt gemäß Fig. 5 entspricht. Bei dem Querschnitt in Fig. 5 sind die beiden U-Schenkel 1 noch nicht aus der Ebene des Bodens 2 herausgekantet. In Fig. 5 sind die Biegelinien 6, längs denen das nach oben Kanten der U-Schenkel 1 erfolgt, eingezeichnet.

Im in Fig. 5 angedeuteten Zustand kann relativ einfach durch Laserschneiden die Verzahnung 5 in den jetzt oberen Abschnitt 4 eingebracht werden. Dies ist in Fig. 4 verdeutlicht. Nach dem Schneiden der Verzahnung 5 können die U-Schenkel im Bereich der Biegelinien 6 nach oben gekantet werden, bis sich der in Fig. 2 abgebildete Querschnitt ergibt. Dieses nach oben Kanten kann ebenfalls durch Walzen erfolgen.

In Fig. 6 ist eine weitere Ausführungsform einer erfindungsgemäßen Schiene abgebildet, bei der seitlich, insbesondere an der rechten Seite der Schiene eine Tischschiene 7 befestigt ist. Diese Tischschiene 7 kann zum Verschieben eines Tisches in einem Kraftfahrzeug parallel zur erfindungsgemäßen Schiene dienen. Auf der Außenseite der Tischschiene 7 ist eine Feder 8 angedeutet, von denen mehrere in regelmäßigen Abständen über die Längserstreckung der Tischschiene 7 an dieser angebracht werden können. Die Federn 8 können zur Befestigung von Teilen an der Schiene oder zur Befestigung der Schiene an Teilen dienen.

Aus Fig. 7 ist ersichtlich, dass die vorgenannten Federn 8 auch an der Schiene gemäß Fig. 1 und Fig. 2 angebracht sein können, und zwar an den Außenseiten der U-Schenkel 1. Auch von den aus Fig. 7 ersichtlichen Federn 8 können eine ganze Reihe beabstandet zueinander über die Längserstreckung der Schiene an den Außenseiten der U-Schenkel angebracht sein. Das Anbringen der Federn 8 und der Tischschiene 7 an der erfindungsgemäßen Schiene kann durch Punktschweißen erfolgen.

Aus Fig. 1 ist weiterhin ersichtlich, dass über die Längserstreckung der Schiene Ausnehmungen 9 in den Abschnitten 3, 4 der umgebogenen oberen Ränder der U-Schenkel 1 vorgesehen sind, die zum Einbringen von Verzahnungsgegenstücken in die Verzahnung 5 dienen.

## Patentansprüche

1. Verfahren zur Herstellung einer Schiene mit einer innen angeordneten Verzahnung (5), insbesondere für die Befestigung und Führung eines Kraftfahrzeugsitzes, wobei die Schiene im wesentlichen einen U-förmigen Querschnitt mit mindestens zweifach nach innen umgebogenen Rändern der U-Schenkel (1) aufweist und wobei die Verzahnung (5) in mindestens einem der mindestens zweifach nach innen umgebogenen Ränder mindestens eines der U-Schenkel (1) angeordnet ist, wobei die Schiene durch Walzen aus einem flächigen Ausgangsmaterial geformt wird, **dadurch gekennzeichnet, dass** die Verzahnung (5) durch Schneiden mit einem Laser gefertigt wird und dass in einem ersten Verfahrensschritt die einander in Querrichtung des Ausgangsmaterials gegenüberliegenden äußeren Ränder zweifach umgebogen werden, so dass der Abschnitt (4), in dem die Verzahnung (5) angeordnet werden soll, sich parallel und beabstandet zu der Fläche des Ausgangsmaterials erstreckt.

2. Verfahren nach Anspruch 1, **dadurch gekennzeichnet, dass** die in Querrichtung einander gegenüberliegenden Ränder des Ausgangsmaterials zweimal um jeweils etwa 90° umgebogen werden.

3. Verfahren nach einem der Ansprüche 1 oder 2, **dadurch gekennzeichnet, dass** nach dem zweifachen Umbiegen der in Querrichtung des Ausgangsmaterials einander gegenüberliegenden Ränder die Verzahnung (5) in den Abschnitt (4) geschnitten wird.

4. Verfahren nach Anspruch 3, **dadurch gekennzeichnet, dass** nach dem Einbringen der Verzahnung (5) in die Abschnitte (4) die U-Schenkel (1) aus dem flächigen Ausgangsmaterial herausgebogen werden.

## Claims

1. Method for producing a rail with an internal toothing (5), in particular for the fastening and guidance of a motor vehicle seat, wherein the rail substantially has a U-shaped cross section with edges of the U limbs (1) bent over inwards at least twice, and wherein the toothing (5) is arranged in at least one of the edges, which are bent over inwards at least twice, of at least one of the U limbs (1), wherein the rail is formed from a sheetlike starting material by rolling, **characterized in that** the toothing (5) is manufactured by cutting with a laser, and **in that**, in a first method step, the outer edges, which lie opposite each other in the transverse direction of the starting material, are bent over twice such that the section (4) in which the toothing (5) is to be arranged extends parallel to and at a distance from the surface of the starting material.

2. Method according to Claim 1, **characterized in that** the edges of the starting material, which edges are opposite each other in the transverse direction, are bent over twice through in each case approximately 90°.

3. Method according to either of Claims 1 and 2, **characterized in that**, after the edges which are opposite each other in the transverse direction of the starting material are bent over twice, the toothing (5) is cut into the section (4).

4. Method according to Claim 3, **characterized in that**, after the toothing (5) is introduced into the sections (4), the U limbs (1) are bent out of the sheetlike starting material.

## Revendications

1. Procédé pour fabriquer une glissière à denture interne (5), en particulier pour la fixation et le guidage d'un siège de véhicule automobile, dans lequel la glissière présente essentiellement une section transversale en forme de U avec des bords des branches du U (1) repliés au moins deux fois vers l'intérieur et dans lequel la denture (5) est disposée dans au moins un des bords repliés au moins deux fois vers l'intérieur d'au moins une des branches (1) du U, dans lequel la glissière est formée par laminage à partir d'une matière première plate, **caractérisé en ce que** la denture (5) est formée par une taille au laser et **en ce que**, dans une première étape du procédé, les bords extérieurs opposés l'un à l'autre dans la direction transversale de la matière première sont repliés deux fois, de telle manière que la partie (4), dans laquelle la denture (5) doit être disposée, s'étende parallèlement et à distance de la surface de la matière première.

2. Procédé selon la revendication 1, **caractérisé en ce que** les bords de la matière première opposés l'un à l'autre en direction transversale sont repliés deux fois d'environ 90° chaque fois.

3. Procédé selon l'une quelconque des revendications 1 ou 2, **caractérisé en ce qu'**après avoir replié deux fois les bords opposés l'un à l'autre en direction transversale de la matière première, on taille la denture (5) dans la partie (4).

4. Procédé selon la revendication 3, **caractérisé en ce qu'**après avoir réalisé la denture (5) dans les parties (4), on plie les branches (1) du U à partir de la matière première plate.
